# EUROPÄISCHE PATENTSCHRIFT

(11) **EP 1 107 889 B1**
(45) Veröffentlichungstag und Bekanntmachung des Hinweises auf die Patenterteilung: **11.05.2005**
(21) Anmeldenummer: 00945571.8
(22) Anmeldetag: 26.05.2000
(51) Int. Cl.: B60S 1/32

(54) **WISCHARM**
WIPER ARM
BRAS D'ESSUIE-GLACE

(30) Priorität: 29.06.1999 DE 19929914
(43) Veröffentlichungstag der Anmeldung: 20.06.2001
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE2000/001721
(87) Internationale Veröffentlichungsnummer: WO 2001/002223

(56) Entgegenhaltungen:
- EP-A- 0 703 129
- US-A- 3 085 821
- US-A- 5 623 742

## Beschreibung

### Stand der Technik

Die Erfindung geht von einem Wischarm nach dem Oberbegriff des Anspruchs 1 aus.

Bekannte Scheibenwischer besitzen einen Wischarm, der aus einem Befestigungsteil und einem über ein Abklappgelenk daran angelenkten Gelenkteil mit einer Wischstange aufgebaut ist. Ein hakenförmiges Ende der Wischstange greift in einen Einhängekasten eines Wischblatts, der von zwei Seitenwangen eines Mittelbügels gebildet wird, und umfaßt ein Anschlußteil mit einem Gelenkbolzen. Das so gebildete Gelenk führt das Wischblatt während der Schwenkbewegung über die Fahrzeugscheibe.

Das Wischblatt besitzt ein in der Regel mehrgliederiges Tragbügelsystem mit an dem Mittelbügel angelenkten, untergeordneten Bügeln, von denen zumindest einige mit Krallen an ihren Enden eine Wischleiste an deren Kopfleiste halten. Das mehrgliederige Tragbügelsystem und in die Kopfleiste eingelegte Federschienen ermöglichen, daß sich beim Wischen die Wischleiste mit einem gleichmäßigen Auflagedruck einer gebogenen Windschutzscheibe anpaßt. Zu diesem Zweck spannt eine Zugfeder das Abklappgelenk vor. Solche Scheibenwischer sind z.B. aus der DE 37 44 237 A1 bekannt. Bei vereinfachten Ausführungen können untergeordnete Bügel, auch Zwischenbügel und Krallenbügel genannt, entfallen. Im einfachsten Fall besitzt der Mittelbügel selbst Krallen, mit denen er die Wischleiste hält. Der Wischarm ist über sein Befestigungsteil mit einer Antriebswelle fest, aber lösbar verbunden.

Die Antriebswelle ragt aus der Fahrzeugkarosserie und hat an ihrem freien Wellenende einen Außenkonus, der mit einem Innenkonus am Befestigungsteil zusammenwirkt, indem eine Schraubenmutter die konischen Teile fest zusammendrückt. Für ein gutes Wischergebnis und um Rattern zu vermeiden, ist es wichtig, daß die Wischleiste mit ihrer Wischlippe unter einem bestimmten Anstellwinkel über die Fahrzeugscheibe geführt wird. Zwar sind die Fertigungstoleranzen der einzelnen, zahlreichen Bauelemente des Scheibenwischers und seines Antriebs gering, jedoch ist die Summe der Toleranzen zusammen mit denen der Befestigung an der Fahrzeugkarosserie und dieser selbst so groß, daß ein optimaler Anstellwinkel in einer Serienfertigung nicht gewährleistet ist. Während die Wischeranlagen wegen ihres großen Längen-/Breitenverhältnisses quer zur Fahrzeugrichtung gut ausgerichtet sind, ergibt sich vor allem in Fahrzeuglängsrichtung eine schlechte Ausrichtung.

Aus der DE 44 28 371 A1 ist eine Wellennabenverbindung eines Scheibenwischers bekannt, bei der die Antriebswelle im Verbindungsbereich einen von der Kreisform abweichenden, insbesondere einen polygonen Querschnitt und einen Absatz aufweist. Das Befestigungsteil liegt mit einem Rand einer Ausnehmung an dem Absatz oder einer Zwischenscheibe an, wobei sich die Ausnehmung zum Ende der Antriebswelle hin konisch erweitert. In die Ausnehmung ist ein passendes, konisches Klemmteil eingesetzt, das durch eine Schraubenmutter gegen das Befestigungsteil gedrückt wird. Das Klemmteil besitzt einen Durchgang für die Antriebswelle, dessen Querschnittprofil dem der Antriebswelle entspricht.

Aus der US-U-3 085 821 ist eine Wellennabenverbindung eines Scheibenwischers bekannt. Das Befestigungsteil liegt mit einem Rand einer Ausnehmung an einem Absatz der Antriebswelle oder einer Zwischenscheibe an, wobei sich die Ausnehmung zum Ende der Antriebswelle hin konisch erweitert. In die Ausnehmung ist ein passendes, konisches Klemmteil eingesetzt, das durch eine Schraubenmutter gegen das Befestigungsteil gedrückt wird. Das Klemmteil besitzt einen Durchgang für die Antriebswelle, der zu einem zylindrischen oder konischen Bereich der Antriebswelle mit einer Rändelung bzw. gezackten Oberfläche paßt. Durch die konische Verbindung zwischen dem Befestigungsteil und dem Klemmteil und gegebenenfalls durch die konische Verbindung zwischen dem Klemmteil und der Antriebswelle wird die gezackte Oberfläche des Befestigungsteils und der Antriebswelle in die bis dahin weitgehend glatte Oberfläche des Klemmteils gedrückt und verformt diese dauerhaft. Das Klemmteil besteht zu diesem Zweck aus einem elastomeren Werkstoff oder einem relativ weichen Nichteisenmetall. Neben einem Kraftschluß wird durch viele kleine Seitenflächen der Zacken ein unterstützender Formschluß erreicht.

### Vorteile der Erfindung

Nach der Erfindung bildet die Kontaktfläche zwischen dem Klemmteil und dem Befestigungsteil einen Teil der Oberfläche einer Kugel, während die Anlagefläche einen Teil einer Mantelfläche eines Zylinders bildet, dessen Zylinderachse durch den Mittelpunkt der Kugel und parallel zur Längsrichtung des Wischblatts verläuft. Dadurch erreicht man auf kleinem Bauraum eine stufenlose Verstellung des Befestigungsteils und damit des Wischarms um seine Längsachse, wenn die Anlagefläche glatt ist. Eine stufenweise Verstellung ist möglich, wenn die Anlagefläche eine zur Zylinderachse parallele Riffelung aufweist. Die Riffelung verstärkt durch Formschluß die kraftschlüssige Verbindung an der Anlagefläche. Der Kraftschluß kann auch dadurch unterstützt werden, indem die Anlagefläche an mindestens einem der zu verbindenden Teile aufgerauht ist.

Der Anstellwinkel des Wischblatts kann somit während der Montage frei gewählt werden, so daß Fertigungstoleranzen diesen nicht negativ beeinflussen. Dabei wird die Höhenlage des Wischarms bei der Einstellung durch die Längsachse des Zylinders bestimmt. Damit sich durch die Einstellung die Höhenlage nicht oder nur geringfügig ändert, ist gemäß einer Ausgestaltung der Erfindung vorgesehen, daß die Zylinderachse in einem geringen Abstand zur Gelenkachse des Abklappgelenks, mit dem das Gelenkteil an dem Befestigungsteil angelenkt ist, verläuft oder die Gelenkachse schneidet. Ein zunehmender Abstand würde sich nämlich bei einer Verstellung in einer größeren Höhenabweichung auswirken.

Die Verbindung zwischen der Antriebswelle und dem Befestigungsteil muß sicher sein und große Drehmomente übertragen können. Trotzdem darf sie auf das Anzugsmoment der Schraubenverbindung nicht in dem Sinne empfindlich reagieren, daß sich beim Anziehen der Schraube die gewählte Einstellung ungewollt verändert. Es ist daher zweckmäßig, daß die Zylinderachse der Anlagefläche des Befestigungsteils durch den Kugelmittelpunkt der Kontaktfläche zwischen dem Klemmteil und dem Befestigungsteil verläuft, wobei die Zylinderachse vorteilhaft innerhalb des Befestigungsbereichs des Befestigungsteils liegt.

Gemäß einer Ausgestaltung der Erfindung wird vorgeschlagen, daß der Einstellwinkel des Befestigungsteils um die Zylinderachse der Anlagefläche durch einen Anschlag begrenzt ist. Hierdurch wird vermieden, daß unbeabsichtigt Einstellwinkel am Fahrzeug montiert werden, die völlig unbrauchbar sind. Die Anschläge schließen den optimalen Anstellwinkel ein, von dem abweichende Einstellungen möglich sind, die zwar nicht optimal, aber brauchbar sind. In einfacher Weise werden die Anschläge von einem länglichen Loch in dem Befestigungsteil gebildet, das quer zur Zylinderachse verläuft und mit der Antriebswelle zusammenwirkt.

Die zylindrische Anlagefläche kann unmittelbar an der Antriebswelle angeformt sein, zweckmäßigerweise ist sie jedoch in eine separate Stützscheibe geformt, die sich nach der Montage an einem Absatz der Antriebswelle abstützt. Die Stützscheibe ist drehbar auf der Antriebswelle geführt, so daß die Längsrichtung des Befestigungsteils und damit die Längsrichtung des Wischarms um die Antriebswellenachse gedreht und ausgerichtet werden kann, bevor die Drehmomentverbindung durch das Klemmteil und die Verschraubung hergestellt wird. Gleichzeitig kann das Befestigungsteil zwischen den beiden Anschlägen um die Zylinderachse gedreht werden, um den Anstellwinkel des Wischblatts zur Fahrzeugscheibe einzustellen.

Das Drehmoment wird zweckmäßigerweise von der Antriebswelle über ein unrundes Profil, vorzugsweise über eins mit einem polygonen Querschnitt, auf das Klemmteil übertragen, das es seinerseits durch einen vorwiegenden Kraftschluß über die kugelförmige Kontaktfläche auf das Befestigungsteil überträgt.

Dadurch wird das Drehmoment an einem kleinen Umfang durch einen sicheren Formschluß übertragen, während der Kraftschluß an einem größeren Durchmesser vorgesehen ist und somit durch kleinere Anpreßkräfte größere Momente übertragen kann. Der Kraftschluß kann durch einen Formschluß unterstützt werden, indem die kugelige Kontaktfläche des Befestigungsteils aufgerauht oder geriffelt ist. Dabei verläuft die Riffelung am Klemmteil zweckmäßigerweise unter einem Winkel zur Riffelung am Befestigungsteil, so daß sich die Richtungen kreuzen und sich ein Formschluß ergibt, der sowohl in Richtung des zu übertragenden Drehmoments als auch in Richtung der Verstellkräfte wirkt, wobei die Riffelungen teilweise ineinander eingraben können. Durch die Verformbarkeit der Riffelung können auch Fertigungstoleranzen ausgeglichen werden.

Nach einer Ausgestaltung der Erfindung weist das Klemmteil an seinem Umfang längs verlaufenden Nuten auf, die kurz vor der größeren Stirnfläche enden. Die Nuten bewirken, daß sich das Klemmteil elastisch verformen und dadurch besser an die Vertiefung des Befestigungsteils anpassen kann. Da die Nuten nicht bis zur Stirnfläche des Klemmteils durchgezogen sind, sondern kurz vorher enden, bleibt eine glatte Stirnfläche erhalten. Ferner sind die Nuten nach außen hin geschützt. Die elastische Wirkung der Nuten kann dadurch vergrößert werden, daß sie an einem Klemmteil mit einem polygonen Profil vorgesehen werden und dabei gegenüber den Kanten des Profils angeordnet sind. Ferner werden die Nuten zweckmäßigerweise mit ringförmigen Stufen kombiniert, die das Klemmteil umgeben und in eine quer dazu verlaufende Riffelung der Vertiefung des Befestigungsteils eindringen.

Um eine spielfreie Formschlußverbindung zwischen der Antriebswelle und dem Klemmteil zu erhalten, die im übrigen leicht lösbar ist, wird vorgesehen, daß sich das polygone Profil der Antriebswelle zur Schraubenmutter hin verjüngt.

Vor der Endmontage können bereits einige Teile der Verbindung vormontiert werden. Hierzu dienen zum einen ein Sicherungsring aus Kunststoff, der die Stützscheibe auf der Antriebswelle drehbar befestigt und zum anderen in einer anderen Ausführung ein Kunststoffclips, der die Stützscheibe um die Zylinderachse schwenkbar am Befestigungsteil festhält. Hierbei weist das Befestigungsteil einen Bund auf, an dem der Kunststoffclip gehalten ist. Ferner kann der Kunststoffclip mit Vorsprüngen in Ausnehmungen des Befestigungsteils eingreifen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

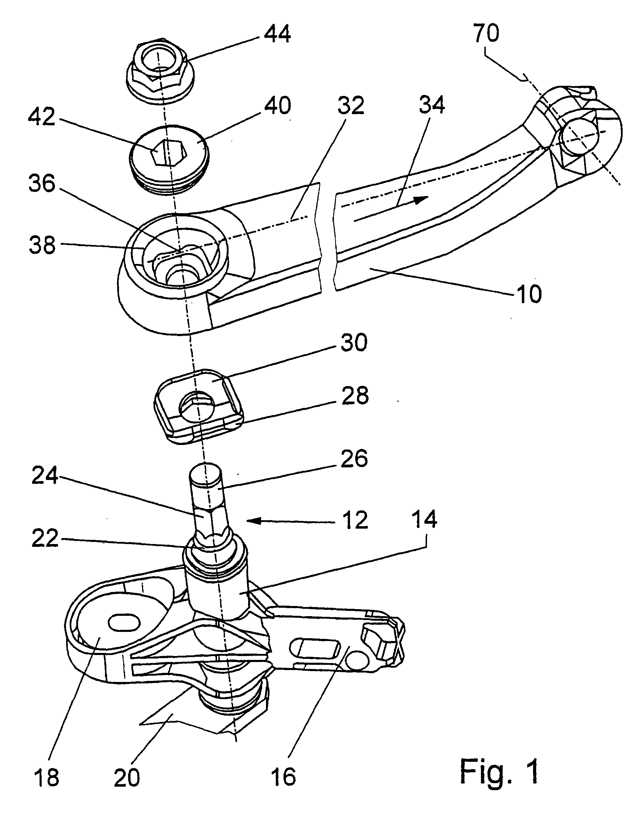

- Fig. 1: in einer Explosionsdarstellung ein Befestigungsteil eines erfindungsgemäßen Wischarms und ein Wischerlager,
- Fig. 2: einen teilweisen Längsschnitt einer Variante in vergrößertem Maßstab in einer Explosionsdarstellung,
- Fig. 3: die Ausführung nach Fig. 2 im zusammengebauten Zustand,
- Fig. 4: einen Schnitt entsprechend der Linie VI-VI in Fig. 3,
- Fig. 5: eine Variante zu Fig. 2,
- Fig. 6: ein Klemmteil in einer perspektivischen Darstellung,
- Fig. 7: eine perspektivische Teilansicht eines Befestigungsteils von oben,
- Fig. 8: eine perspektivische Teilansicht eines Befestigungsteils von unten und
- Fig. 9: ein Befestigungsteil in drei verschiedenen Einstellungen.

### Beschreibung der Ausführungsbeispiele

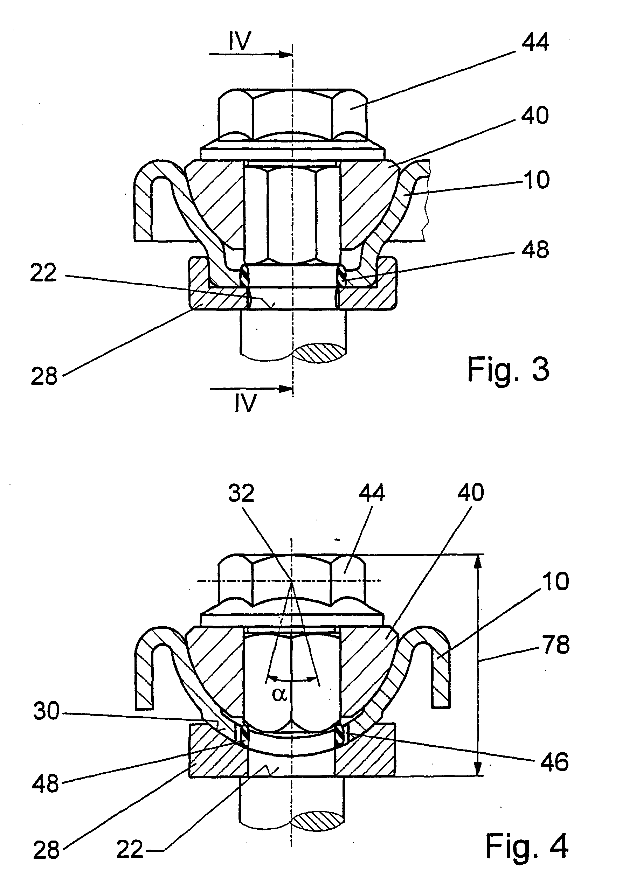

Die Zeichnung zeigt nur einen Teil einer Wischeranlage mit einem Wischarm, und zwar soweit es für das Verständnis der Erfindung erforderlich ist. Zu dem Wischarm gehört ein Befestigungsteil 10, das auf einer Antriebswelle 12 befestigt wird. Die Antriebswelle 12 ist in einem Lagergehäuse 14 gelagert, das einen Anschlußstutzen 16 für einen nicht näher dargestellten Wischerträger und ein Befestigungsauge 18 aufweist, mit dem das Lagergehäuse 14 an einer nicht dargestellten Fahrzeugkarosserie befestigt ist. Angetrieben wird die Antriebswelle 12 von einem Wischermotor über ein Hebelgetriebe und eine Kurbel 20, die an einem Ende mit der Antriebswelle 12 fest verbunden ist. Das freie Ende der Antriebswelle 12 besitzt einen Absatz 22 und ein Profil 24 mit einem polygonen Querschnitt, sowie ein sich daran anschließendes Gewinde 26. Auf das freie Ende der Antriebswelle 12 wird eine Stützscheibe 28 aufgefädelt, die sich am Absatz 22 abstützt, aber um die Antriebswelle 12 drehbar geführt ist. In die Stützscheibe 28 ist zum Befestigungsteil 10 hin eine konkave, zylindrische Anlagefläche 30 geformt, an der eine entsprechende zylindrische Fläche 30 des Befestigungsteils 10 anliegt (Fig. 4).

Das Befestigungsteil 10 besitzt eine Vertiefung 38, in die ein Klemmteil 40, 50 eingesetzt wird. Eine Schraubenmutter 44, die in das Gewinde 26 eingreift, verspannt das Klemmteil 40, 50, das Befestigungsteil 10 und eine Stützscheibe 28 mit dem Absatz 22 der Antriebswelle 12. Das Befestigungsteil 10 kann aus Druckguß gefertigt sein. Zweckmäßigerweise ist es aber aus Blech geformt, wobei die Vertiefung 38 tiefgezogen ist.

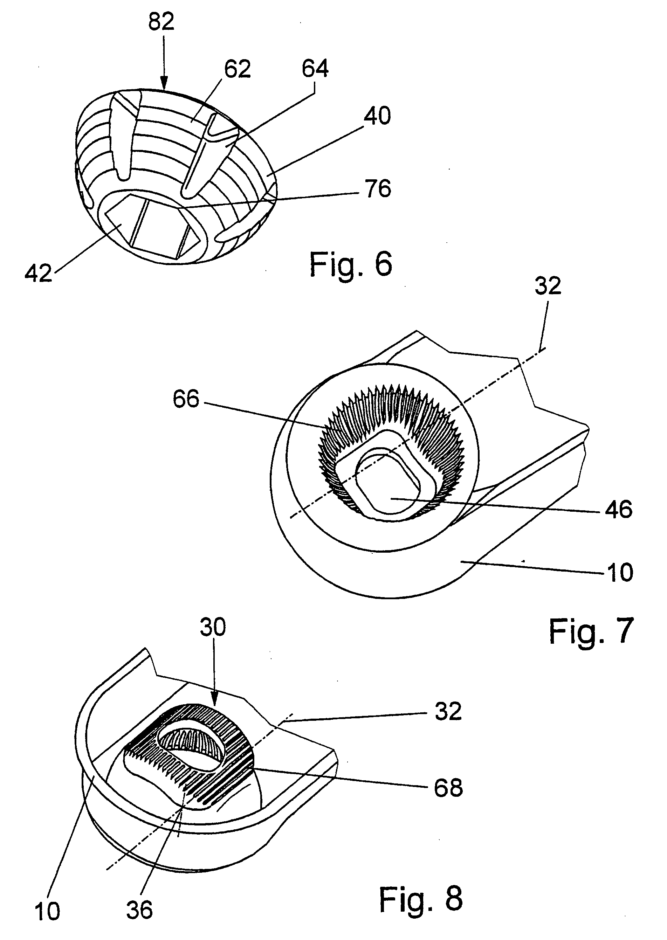

Die zylindrische Anlagefläche 30 am Befestigungsteil 10 (Fig. 8) ist so ausgerichtet, daß ihre Zylinderachse 32 in Längsrichtung 34 des Wischarms verläuft. Ferner bildet die Kontaktfläche 66 (Fig. 7) der Vertiefung 38 des Befestigungsteils 10 und die Oberfläche des Klemmteils 40, 50 einen Teil einer Kugel, deren Mittelpunkt 36 auf der Zylinderachse 32 liegt. Somit ist es möglich, das Befestigungsteil 10 vor dem Verspannen durch die Schraubenmutter 44 um die Antriebswelle 12 zu drehen und damit den Wischarm auf seine Parkposition einzustellen.

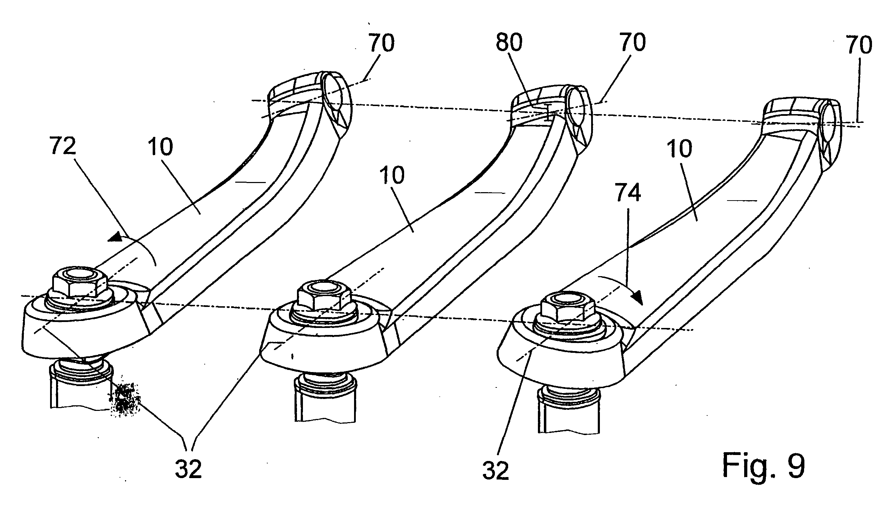

Ferner kann das Befestigungsteil 10 um die Zylinderachse 32 geschwenkt werden. Fig. 9 zeigt, daß das Befestigungsteil 10 ausgehend von einer Mittelstellung um einen begrenzten Betrag in entgegengesetzte Stellrichtungen 72 und 74 verstellt werden kann. Dabei ist es zweckmäßig, daß die Zylinderachse 32 und damit ebenfalls der Kugelmittelpunkt 36 im Befestigungsbereich 78 des Befestigungsteils liegen. Um die Verstellung zu begrenzen, ist das Loch 46 im Befestigungsteil 10 quer zur Zylinderachse 32 länglich, so daß es an der Antriebswelle 12 jeweils in beiden Stellrichtungen 72, 74 einen Anschlag bildet.

Am freien Ende des Befestigungsteils 10 ist ein nicht dargestelltes Gelenkteil angelenkt, wobei die Gelenkachse mit 70 bezeichnet ist. Zweckmäßigerweise kreuzt die Zylinderachse 32 die Gelenkachse 70, auf jeden Fall sollte der Abstand 80 zwischen der Zylinderachse 32 und der Gelenkachse 70 möglichst klein gewählt werden, damit sich bei der Verstellung des Befestigungsteils 10 nur geringe Höhenabweichungen zwischen der Fahrzeugscheibe und dem Gelenk ergeben. Wie aus Fig. 9 zu entnehmen ist, verändert sich trotz unterschiedlicher Einstellwinkel α (Fig. 4) die mittlere Höhenlage der Gelenkachse 70 nicht.

Das Klemmteil 40, 50 besitzt ein inneres Mitnahmeprofil 42, 54 das zum äußeren Profil 24, 52 der Antriebswelle 12 paßt und das Antriebsmoment formschlüssig von der Antriebswelle 12 auf das Klemmteil 40, 50 überträgt. Es hat zweckmäßigerweise einen von der Kreisform abweichenden Querschnitt, vorzugsweise einen Polygonen. Zur leichteren Montage und Demontage und ferner um Spielfreiheit zu erreichen, verlaufen die Profile 54 und 52 zum Ende der Antriebswelle 12 hin konisch zu. Durch die formschlüssige Verbindung zwischen dem Klemmteil 40, 50 und der Antriebswelle 12 lassen sich auf kleinem Durchmesser große Drehmomente sicher übertragen, während der deutliche größere Durchmesser des äußeren Umfangs des Klemmteils 40, 50 geeignet ist, das Antriebsmoment durch Kraftschluß auf das Befestigungsteil 10 zu übertragen. Um größere Antriebsmomente übertragen zu können, ist es zweckmäßig, den Kraftschluß zwischen dem Klemmteil 40 und dem Befestigungsteil 10 durch eine aufgerauhte Oberfläche oder durch eine Riffelung 68 zu verbessern. Vorteilhaft ist es, wenn die Riffelung 68 am Befestigungsteil 10 quer zu einer möglichen Riffelung oder Oberflächenstruktur des Klemmteils 40 verläuft. Z.B. kann das Klemmteil 40 an seinem Umfang Stufen 62 aufweisen (Fig. 6), die sich in die in Richtung der Antriebswelle 12 verlaufende Riffelung 68 des Befestigungsteils 10 beim Verspannen einarbeiten und somit einen sicheren Halt geben. Durch diese Maßnahme können auch Fertigungstoleranzen ausgeglichen werden.

Weil die Zylinderachse 32 der zylindrischen Anlagefläche 30 der Stützscheibe 28 radial zur Antriebswelle 12 verläuft, wirken in Stellrichtung 72, 74 keine Antriebsmomente, die die Einstellung während des Betriebs nicht unbeabsichtigt verändern könnten. Die Anlageflächen 30 sowohl an der Stützscheibe 28 als auch am Befestigungsteil 10 können glatt ausgebildet sein, um eine stufenlose Verstellung zu erzielen. Mit einer Riffelung 68 in Richtung der Zylinderachse 32 ist es möglich, den Einstellwinkel α inkremental zu verändern.

Damit sich das Klemmteil 40, 50 gut an die Vertiefung 38 anpassen kann, besitzt das Klemmteil 40 an seinem Umfang in Längsrichtung verlaufende Nuten 64, wodurch das Klemmteil 40 in Umfangsrichtung elastischer wird. Um eine durchgehend glatte Stirnfläche 82 zu erhalten, ist es zweckmäßig, daß die Nuten 64 kurz vor der Stirnfläche 82 enden. In Kombination mit einem polygonen Mitnahmeprofil 42, 54 ist es zweckmäßig, die Nuten 64 gegenüber den Kanten 76 des Mitnahmeprofils 42 vorzusehen, wodurch eine größere Elastizität erreicht wird.

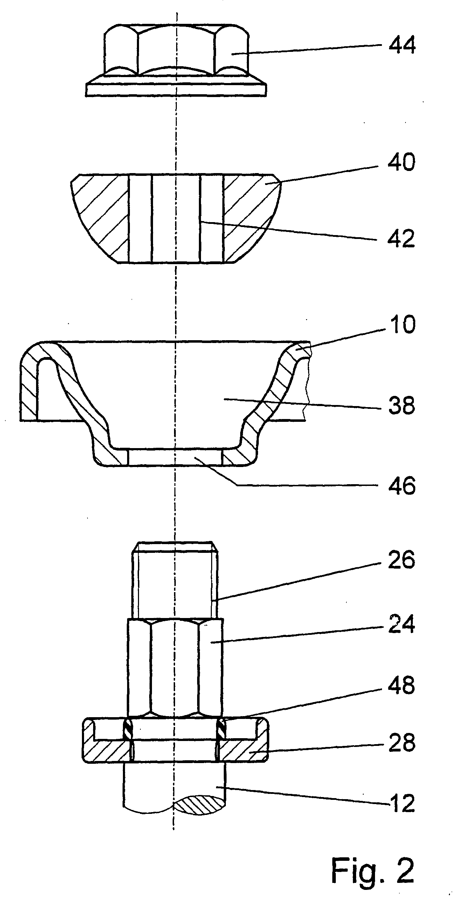

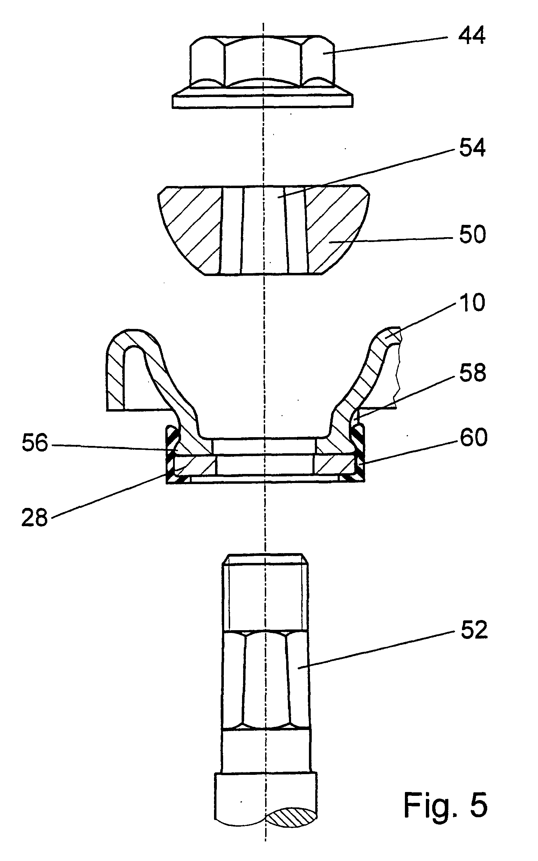

Die Montage des Befestigungsteils 10 kann erleichtert werden, wenn die Stützscheibe 28 vor der Montage mit einem anderen Bauteil verbunden wird. Hierzu dient ein Sicherungsring 48 (Fig. 2), der die Stützscheibe 28 auf der Antriebswelle 12 hält. Eine andere Möglichkeit ist in Fig. 5 dargestellt, wobei gemäß der linken Hälfte der Darstellung ein Kunststoffclip 60 hinter einen Bund 56 des Befestigungsteils 10 greift oder wie die rechte Seite der Darstellung zeigt, in einer entsprechender Ausnehmung 58 einrastet. Der Bund 56 und die Ausnehmung 58 müssen so angeordnet und gestaltet sein, daß sie die Verstellung des Befestigungsteils 10 um die Zylinderachse 32 nicht behindern.

### Bezugszeichen

- 10: Befestigungsteil
- 12: Antriebswelle
- 14: Lagergehäuse
- 16: Anschlußstutzen
- 18: Befestigungsauge
- 20: Kurbel
- 22: Absatz
- 24: Profil
- 26: Gewinde
- 28: Stützscheibe
- 30: Anlagefläche
- 32: Zylinderachse
- 34: Längsrichtung
- 36: Kugelmittelpunkt
- 38: Vertiefung
- 40: Klemmteil
- 42: Mitnahmeprofil
- 44: Schraubenmutter
- 46: Loch
- 48: Sicherungsring
- 50: Klemmteil
- 52: Profil (konisch)
- 54: Mitnahmeprofil
- 56: Bund
- 58: Ausnehmung
- 60: Kunststoffclip
- 62: Stufe
- 64: Nut
- 66: Kontaktfläche
- 68: Riffelung
- 70: Gelenkachse
- 72: Stellrichtung
- 74: Stellrichtung
- 76: Kante
- 78: Befestigungsbereich
- 80: Abstand
- 82: Stirnfläche

- α: Einstellwinkel

## Patentansprüche

1. Wischarm mit einem angelenkten Wischblatt und einem Befestigungsteil (10) zum Befestigen an einer Antriebswelle (12), indem diese durch eine sich erweiternde Vertiefung (38) des Befestigungsteils (10) gesteckt ist und eine Schraubenmutter (44) das Befestigungsteil (10) über ein Klemmteil (40, 50), das der Vertiefung (38) angepaßt ist, gegen eine Anlagefläche (30) mit der Antriebswelle (12) verspannt, **dadurch gekennzeichnet, daß** die Kontaktfläche (66) zwischen dem Klemmteil (40, 50) und dem Befestigungsteil (10) einen Teil der Oberfläche einer Kugel und die Anlagefläche (30) einen Teil einer Mantelfläche eines Zylinders bilden, dessen Zylinderachse (32) durch den Kugelmittelpunkt (36) und parallel zur Längsrichtung (34) des Wischblatts verläuft.

2. Wischarm nach Anspruch 1, **dadurch gekennzeichnet, daß** die zylindrische Anlagefläche (30) in eine Stützscheibe (28) geformt ist, die sich an einem Absatz (22) der Antriebswelle (12) abstützt und um die Antriebswelle (12) drehbar ist.

3. Wischarm nach einem der vorhergehenden Ansprüche, **dadurch gekennzeichnet, daß** der Einstellwinkel (α) des Befestigungsteils (10) um die Zylinderachse (32) durch einen Anschlag begrenzt ist.

4. Wischarm nach Anspruch 3, **dadurch gekennzeichnet, daß** der Anschlag von einem in Stellrichtung (72, 74) länglichen Loch (46) im Befestigungsteil (10) mit der Antriebswelle (12) gebildet wird.

5. Wischarm nach einem der vorhergehenden Ansprüche, **dadurch gekennzeichnet, daß** die Zylinderachse (32) innerhalb des Befestigungsbereichs (78) des Befestigungsteils (10) verläuft.

6. Wischarm nach einem der vorhergehenden Ansprüche, **dadurch gekennzeichnet, daß** an dem Befestigungsteil (10) ein Gelenkteil angelenkt ist und die Zylinderachse (32) in einem geringen Abstand (80) zur Gelenkachse (70) verläuft.

7. Wischarm nach einem der vorhergehenden Ansprüche, **dadurch gekennzeichnet, daß** das Befestigungsteil (10) aus Blech geformt und die Vertiefung (38) tiefgezogen ist.

8. Wischarm nach einem der vorhergehenden Ansprüche, **dadurch gekennzeichnet, daß** das Befestigungsteil (10) und das Klemmteil (50) an der kugelförmigen Kontaktfläche (66) aufgerauht oder so geriffelt ist, daß sich die Riffelung des Befestigungsteils (10) mit der Riffelung des Klemmteils (50) kreuzt.

9. Wischarm nach einem der vorhergehenden Ansprüche, **dadurch gekennzeichnet, daß** das Klemmteil (40, 50) an seinem Umfang ringförmige Stufen (62) aufweist.

10. Wischarm nach einem der vorhergehenden Ansprüche, **dadurch gekennzeichnet, daß** das Klemmteil (40, 50) über ein Profil (24, 52) mit der Antriebswelle (12) verbunden ist, das im Querschnitt von der Kreisform abweicht.

11. Wischarm nach Anspruch 10, **dadurch gekennzeichnet, daß** das Profil (24, 52) einen polygonen Querschnitt hat.

12. Wischarm nach einem der vorhergehenden Ansprüche, **dadurch gekennzeichnet, daß** das Klemmteil (40) an seinem Umfang längs verlaufende Nuten (64) aufweist.

13. Wischarm nach Anspruch 12, **dadurch gekennzeichnet, daß** die Nuten (64) kurz vor der größeren Stirnfläche (82) enden.

14. Wischarm nach einem der Ansprüche 11 bis 13, **dadurch gekennzeichnet, daß** die Nuten (64) gegenüber den Kanten (76) des polygonen Profils (24, 52) liegen.

15. Wischarm nach einem der Ansprüche 11 bis 14, **dadurch gekennzeichnet, daß** sich das polygone Profil (52) der Antriebswelle (12) zur Schraubenmutter (44) hin verjüngt.

16. Wischarm nach einem der Ansprüche 2 bis 15, **dadurch gekennzeichnet, daß** die Stützscheibe (28) durch einen Sicherungsring (48) aus Kunststoff auf der Antriebswelle (12) drehbar befestigt ist.

17. Wischarm nach einem der Ansprüche 2 bis 15, **dadurch gekennzeichnet, daß** die Stützscheibe (28) an dem Befestigungsteil (10) um die Zylinderachse (32) schwenkbar befestigt ist.

18. Wischarm nach Anspruch 17, **dadurch gekennzeichnet, daß** die Stützscheibe (28) mittels eines Kunststoffclips (60) am Befestigungsteil (10) befestigt ist.

19. Wischarm nach Anspruch 18, **dadurch gekennzeichnet, daß** das Befestigungsteil (10) einen Bund (56) aufweist, an dem der Kunststoffclip (60) gehalten ist.

20. Wischarm nach Anspruch 18, **dadurch gekennzeichnet, daß** das Befestigungsteil (10) Ausnehmungen (58) aufweist, in die der Kunststoffclip (60) einrastet.

21. Wischarm nach einem der vorhergehenden Ansprüche, **dadurch gekennzeichnet, daß** die zylindrische Anlagefläche (30) des Befestigungsteils (10) und/oder der Stützscheibe (28) eine zur Zylinderachse (32) parallel verlaufende Riffelung (68) aufweist.

## Claims

1. Wiper arm with an articulated wiper blade and fastening part (10) for fastening it to a drive shaft (12) by the latter being plugged through a widening depression (38) of the fastening part (10) and a screw nut (44) fixing the fastening part (10) via a clamping part (40, 50), which is matched to the depression (38), against a bearing surface (30) with a drive shaft (12), **characterized in that** the contact surface (66) between the clamping part (40, 50) and the fastening part (10) forms part of the surface of a sphere and the bearing surface (30) forms part of a circumferential surface of a cylinder, the cylinder axis (32) of which runs through the sphere centre point (36) and parallel to the longitudinal direction (34) of the wiper blade.

2. Wiper arm according to Claim 1, **characterized in that** the cylindrical bearing surface (30) is shaped into a supporting disc (28) which is supported on a shoulder (22) of the drive shaft (12) and can be rotated about the drive shaft (12).

3. Wiper arm according to one of the preceding claims, **characterized in that** the setting angle (α) of the fastening part (10) about the cylinder axis (32) is limited by a stop.

4. Wiper arm according to Claim 3, **characterized in that** the stop is formed by a hole (46), which is elongate in the adjusting direction (72, 74), in the fastening part (10) with the drive shaft (12).

5. Wiper arm according to one of the preceding claims, **characterized in that** the cylinder axis (32) runs within the fastening region (78) of the fastening part (10).

6. Wiper arm according to one of the preceding claims, **characterized in that** a hinge part is coupled to the fastening part (10) and the cylinder axis (32) runs at a small distance (80) from the hinge axis (70).

7. Wiper arm according to one of the preceding claims, **characterized in that** the fastening part (10) is formed from sheet metal and the depression (38) is deep-drawn.

8. Wiper arm according to one of the preceding claims, **characterized in that** the fastening part (10) and the clamping part (50) are roughened or corrugated on the spherical contact surface (66) in such a manner that the corrugation of the fastening part (10) intersects the corrugation of the clamping part (50).

9. Wiper arm according to one of the preceding claims, **characterized in that** the clamping part (40, 50) has annular steps (62) on its circumference.

10. Wiper arm according to one of the preceding claims, **characterized in that** the clamping part (40, 50) is connected to the drive shaft (12) via a profile (24, 52) which deviates in cross section from the circular form.

11. Wiper arm according to Claim 10, **characterized in that** the profile (24, 52) has a polygonal cross section.

12. Wiper arm according to one of the preceding claims, **characterized in that** the clamping part (40) has grooves (64) running longitudinally on its circumference.

13. Wiper arm according to Claim 12, **characterized in that** the grooves (64) end shortly before the relatively large end surface (82).

14. Wiper arm according to one of Claims 11 to 13, **characterized in that** the grooves (64) lie opposite the edges (76) of the polygonal profile (24, 52).

15. Wiper arm according to one of Claims 11 to 14, **characterized in that** the polygonal profile (52) of the drive shaft (12) tapers towards the screw nut (44)

16. Wiper arm according to one of Claims 2 to 15, **characterized in that** the supporting disc (28) is fastened rotatably on the drive shaft (12) by a plastic securing ring (48).

17. Wiper arm according to one of Claims 2 to 15, **characterized in that** the supporting disc (28) is fastened to the fastening part (10) in a manner such that it can pivot about the cylinder axis (32).

18. Wiper arm according to Claim 17, **characterized in that** the supporting disc (28) is fastened to the fastening part (10) by means of a plastic clip (60).

19. Wiper arm according to Claim 18, **characterized in that** the fastening part (10) has a collar (56) on which the plastic clip (60) is held.

20. Wiper arm according to Claim 18, **characterized in that** the fastening part (10) has recesses (58) into which the plastic clip (60) snaps.

21. Wiper arm according to one of the preceding claims, **characterized in that** the cylindrical bearing surface (30) of the fastening part (10) and/or of the supporting disc (28) has a corrugation (68) running parallel to the cylinder axis (32).

## Revendications

1. Bras d'essuie-glace avec raclette d'essuie-glace articulée et élément de fixation (10) pour la fixation à un arbre d'entraînement (12) en emboîtant celui-ci dans un creux (38) s'évasant de l'élément de fixation (10), et avec un écrou (44) serrant sur l'arbre d'entraînement (12) l'élément de fixation (10) au moyen d'un élément de serrage (40, 50) adapté au creux (38) contre une surface d'appui (30),
**caractérisé en ce que**
la surface de contact (66) entre l'élément de serrage (40, 50) et l'élément de fixation (10) forme une partie de la surface d'une sphère et la surface d'appui (30) une partie d'une surface d'enveloppe d'un cylindre dont l'axe de cylindre (32) traverse le point central de sphère (36) et s'étend parallèlement à la direction longitudinale (34) de la raclette d'essuie-glace.

2. Bras d'essuie-glace selon la revendication 1,
**caractérisé en ce que**
la surface d'appui (30) cylindrique est formée dans une rondelle d'appui (28) qui prend appui sur un gradin (22) de l'arbre d'entraînement (12) et est rotative autour de l'arbre d'entraînement (12).

3. Bras d'essuie-glace selon l'une quelconque des revendications précédentes,
**caractérisé en ce que**
l'angle de réglage (α) de l'élément de fixation (10) autour de l'axe de cylindre (32) est limité par une butée.

4. Bras d'essuie-glace selon la revendication 3,
**caractérisé en ce que**
la butée est formée par un trou (46) oblong dans la direction de réglage (72, 74) dans l'élément de fixation (10) avec l'arbre d'entraînement (12).

5. Bras d'essuie-glace selon l'une quelconque des revendications précédentes,
**caractérisé en ce que**
l'axe de cylindre (32) s'étend à l'intérieur de la zone de fixation (78) de l'élément de fixation (10).

6. Bras d'essuie-glace selon l'une quelconque des revendications précédentes,
**caractérisé en ce qu'**
un élément d'articulation est articulé sur l'élément de fixation (10) et l'axe de cylindre (32) s'étend à une faible distance (80) de l'axe d'articulation (70).

7. Bras d'essuie-glace selon l'une quelconque des revendications précédentes,
**caractérisé en ce que**
l'élément de fixation (10) est formé de tôle et le creux (38) est embouti.

8. Bras d'essuie-glace selon l'une quelconque des revendications précédentes,
**caractérisé en ce que**
l'élément de fixation (10) et l'élément de serrage (50) à la surface de contact (66) sphérique sont rugueux ou cannelés de sorte que la cannelure de l'élément de fixation (10) se croise avec la cannelure de l'élément de serrage (50).

9. Bras d'essuie-glace selon l'une quelconque des revendications précédentes,
**caractérisé en ce que**
l'élément de serrage (40, 50) présente des gradins (62) annulaires à sa périphérie.

10. Bras d'essuie-glace selon l'une quelconque des revendications précédentes,
**caractérisé en ce que**
l'élément de serrage (40, 50) est relié à l'arbre d'entraînement (12) par un profil (24, 52) dont la section transversale diffère de la forme circulaire.

11. Bras d'essuie-glace selon la revendication 10,
**caractérisé en ce que**
le profil (24, 52) présente une section transversale polygonale.

12. Bras d'essuie-glace selon l'une quelconque des revendications précédentes,
**caractérisé en ce que**
l'élément de serrage (40) présente des rainures (64) longitudinales à sa périphérie.

13. Bras d'essuie-glace selon la revendication 12,
**caractérisé en ce que**
les rainures (64) se terminent juste avant la face frontale (82), qui est plus grande.

14. Bras d'essuie-glace selon l'une quelconque des revendications 11 à 13,
**caractérisé en ce que**
les rainures (64) se situent en regard des arêtes (76) du profil (24, 52) polygonal.

15. Bras d'essuie-glace selon l'une quelconque des revendications 11 à 14,
**caractérisé en ce que**
le profil (52) polygonal de l'arbre d'entraînement (12) se rétrécit en direction de l'écrou (44).

16. Bras d'essuie-glace selon l'une quelconque des revendications 2 à 15,
**caractérisé en ce que**
la rondelle d'appui (28) est fixée en rotation à l'arbre d'entraînement (12) au moyen d'un circlip (48) en matière plastique.

17. Bras d'essuie-glace selon l'une quelconque des revendications 2 à 15,
**caractérisé en ce que**
la rondelle d'appui (28) est fixée à l'élément de fixation (10) de manière à pivoter autour de l'axe de cylindre (32).

18. Bras d'essuie-glace selon la revendication 17,
**caractérisé en ce que**
la rondelle d'appui (28) est fixée à l'élément de fixation (10) au moyen d'un clip (60) en matière plastique.

19. Bras d'essuie-glace selon la revendication 18,
**caractérisé en ce que**
l'élément de fixation (10) présente un collet (56) sur lequel est maintenu le clip (60) en matière plastique.

20. Bras d'essuie-glace selon la revendication 18,
**caractérisé en ce que**
l'élément de fixation (10) présente des évidements (58) dans lesquels s'enclenche le clip (60) en matière plastique.

21. Bras d'essuie-glace selon l'une quelconque des revendications précédentes,
**caractérisé en ce que**
la surface d'appui (30) cylindrique de l'élément de fixation (10) et/ou de la rondelle d'appui (28) présente une cannelure (68) s'étendant parallèlement à l'axe de cylindre (32).
